# EUROPÄISCHE PATENTSCHRIFT

(11) **EP 3 894 970 B1**
(45) Veröffentlichungstag und Bekanntmachung des Hinweises auf die Patenterteilung: **18.10.2023**
(21) Anmeldenummer: 19801859.0
(22) Anmeldetag: 11.11.2019
(51) Int. Cl.: G05B 19/418

(54) **FELDGERÄTEADAPTER ZUR DRAHTLOSEN DATENÜBERTRAGUNG**
FIELD DEVICE ADAPTER FOR WIRELESS DATA TRANSFER
ADAPTATEUR D'APPAREIL DE TERRAIN POUR LA TRANSMISSION SANS FIL DE DONNÉES

(30) Priorität: 11.12.2018 DE 102018131685
(43) Veröffentlichungstag der Anmeldung: 20.10.2021
(73) Patentinhaber: Endress+Hauser SE+Co. KG, 79689 Maulburg (DE)
(72) Erfinder: SCHÄUBLE, Harald, 79541 Lörrach (DE); LILL, Dirk, 79100 Freiburg (DE)
(74) Vertreter: Laufer, Michael
(86) Internationale Anmeldenummer: PCT/EP2019/080818
(87) Internationale Veröffentlichungsnummer: WO 2020/120045

(56) Entgegenhaltungen:
- EP-A1- 2 984 530
- EP-B1- 2 340 468
- EP-B1- 2 984 530
- WO-A1-2016/165928
- DE-A1-102008 036 967
- DE-A1-102008 043 199

## Beschreibung

Die Erfindung bezieht sich auf einen Feldgeräteadapter zur HART Kommunikation mit einem Feldgerät und ein System der Automatisierungstechnik.

In der Automatisierungstechnik, insbesondere in der Prozessautomatisierungstechnik, werden vielfach Feldgeräte eingesetzt, die zur Bestimmung, Optimierung und/oder Beeinflussung von Prozessgrößen dienen. Zur Erfassung von Prozessgrößen dienen Sensoren, wie beispielsweise Füllstandsmessgeräte, Durchflussmessgeräte, Druck- und Temperaturmessgeräte, Leitfähigkeitsmessgeräte, usw., welche die entsprechenden Prozessgrößen Füllstand, Durchfluss, Druck, Temperatur bzw. Leitfähigkeit erfassen. Zur Beeinflussung von Prozessgrößen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Sinne dieser Anmeldung alle Geräte bezeichnet, die prozessnah eingesetzt werden und die prozessrelevanten Informationen, insbesondere eine oder mehrere Prozessgrößen (Druck, Durchfluss, Temperatur, etc.) erfassen oder im Falle von Aktoren eine oder mehrere Prozessgrößen stellen.

Eine Vielzahl solcher Feldgeräte wird von der Firma Endress + Hauser hergestellt und vertrieben.

Gegenwärtig sind in einer Vielzahl der bestehenden Automatisierungsanlagen noch Zweileiterfeldgeräte gängig, die über eine Zweidrahtleitung zu einer übergeordneten Einheit, bspw. eine Steuereinheit SPS, verbunden sind. Die Zweileiterfeldgeräte sind derartig ausgebildet, dass die Mess- bzw. Stellwerte als Haupt-Prozessgröße über die Zweidrahtleitung bzw. das Zweileiterkabel analog in Form eines 4-20 mA Signals kommuniziert, d.h. übertragen, werden. Zur Übertragung aller anderen Daten hat sich insbesondere das HART Protokoll bewährt, bei welchem dem analogen Stromsignal von 4-20 mA ein Frequenzsignal als digitales Zweileitersignal zur Datenübertragung überlagert wird. Gemäß dem HART Protokoll wird zwischen 1200 Hz und 2200 Hz zur Datenübertragung umgeschaltet, wobei die niedrigere Frequenz für eine logische "1" und die höhere Frequenz für eine logische "0" steht. Auf diese Weise bleibt das sich nur langsam veränderliche analoge Stromsignal von der Frequenzüberlagerung unberührt, sodass mittels HART analoge und digitale Kommunikation vereint wird.

Um eine dem HART-Standard konforme Kommunikation auf der Zweidrahtleitung zu ermöglichen, ist ein HART Kommunikationswiderstand notwendig. Der HART Kommunikationswiderstand kann entweder in einen Kommunikationsteilnehmer (Feldgerät, übergeordnete Einheit, Bedieneinheit) integriert sein oder quasi als eigenständige Einheit in die Zweidrahtleitung eingebracht sein.

Zu beachten gilt es allerdings, dass in dem Fall, dass bereits ein HART Kommunikationswiderstand in die Zweidrahtleitung eingebracht ist, bspw. um die Kommunikation zwischen einem Feldgerät und einer übergeordneten Einheit, insbesondere einer SPS (Speicherprogrammierbare Steuerung), zu ermöglichen, kein weiterer HART Kommunikationswiderstand zu geschaltet wird. Dies kommt insbesondere dann vor, wenn eine HART Kommunikation zu dem Feldgerät von einer Bedieneinheit aus erfolgen soll.

Aus dem Stand der Technik sind die DE 10 2008 036967 A1, die WO 2016/165928 A1, die DE 10 2008 043199 A1 sowie die EP 2 984 530 A1 bekannt geworden. Die DE 10 2008 036967 A1 offenbart eine universelle Schnittstelle für einen Wireless Adapter, der ein in der Automatisierungstechnik gebräuchliches Kommunikationsprotokoll unterstützt. Die WO 2016/165928 A1 offenbart ein Verfahren zum automatischen Hinzu- oder Wegschalten eines Kommunikationswiderstandes eines HART-Gerätes. Die DE 10 2008 043199 A1 offenbart ein autarkes Feldgerät der Automatisierungstechnik.

Der Erfindung liegt somit die Aufgabe zugrunde eine möglichst fehlerfreie HART-Kommunikation, insbesondere von einer Bedieneinheit zu einem Feldgerät, zu ermöglichen.

Die Aufgabe wird erfindungsgemäß gelöst durch den Feldgeräteadapter gemäß Patentanspruch 1 und das System gemäß Patentanspruch 9.

Der erfindungsgemäße Feldgeräteadapter zur HART Kommunikation mit einem Feldgerät umfasst zumindest:
- ein Adaptergehäuse mit einem ersten Ende und einem zweiten Ende, wobei das erste Ende zumindest ein erstes Anschlusselement und ein zweites Anschlusselement zum elektrischen Anschließen einer ersten Zweidrahtleitung und das zweite Ende zumindest ein drittes Anschlusselement und ein viertes Anschlusselement zum elektrischen Anschließen einer zweiten Zweidrahtleitung aufweist, wobei das Adaptergehäuse ferner eine Adapterkammer zwischen dem ersten und dem zweiten Ende aufweist;
- eine in der Adapterkammer angeordnete Adapterelektronik, die das erste Anschlusselement mit dem dritten Anschlusselement durch eine erste elektrische Verbindungsleitung und das zweite Anschlusselement mit dem vierten Anschlusselement durch eine zweite elektrische Verbindungsleitung verbindet, wobei die Adapterelektronik ferner einen in die erste Verbindungsleitung eingebrachten Kommunikationswiderstand und eine, vorzugsweise ungeregelte bzw. nicht geregelte Versorgungschaltung zum Bereitstellen einer Versorgungsspannung aus einem in der ersten Verbindungsleitung fließenden Schleifenstrom umfasst, wobei die Adapterelektronik ferner ein als sekundärer Master eingerichtetes HART-Modem, welches über einen Abgriffspunkt mit der ersten Verbindungsleitung verbunden ist, und eine Schaltung zum Kurzschließen des Kommunikationswiderstandes aufweist, wobei die Adapterelektronik dazu eingerichtet ist, ein zweites Funksignal drahtlos zu empfangen und mittels des zweiten Funksignals die Schaltung zum Kurzschließen des Kommunikationswiderstandes derartig zu steuern, dass zumindest der Kommunikationswiderstand per Funk selektiv zu- oder abschaltbar ist, sodass in einem überbrückten Zustand ein durch die Adapterelektronik empfangenes erstes Funksignal in ein, vorzugsweise HART basiertes Zweileitersignal übersetzt und über den Abgriffspunkt auf den Schleifenstrom aufmoduliert werden kann.

Erfindungsgemäß wird vorgeschlagen, einen internen (HART) Kommunikationswiderstand des Feldgeräteadapters per Funk ein- bzw. ausschalten, sodass gegebenenfalls ein externer HART Kommunikationswiderstand verwendet werden kann. Zum ein- bzw. ausschalten wird der interne (HART) Kommunikationswiderstand überbrückt. Die Steuerung kann über eine Funkschnittstelle, wie z.B. Bluetooth oder einer davon abgewandelten Variante Bluetooth Low Energy, erfolgen. Zum einen kann dies über eine separate Funkschnittstelle (separate Konfigurationsschnittstelle) erfolgen, oder über eine bereits vorhandene Schnittstelle des Feldgeräteadapters zur drahtlosen Übertragen von HART basierten Zweidrahtsignalen, die zwischen einer übergeordneten Einheit und einem Feldgerät ausgetauscht werden, erfolgen.

Eine vorteilhafte Ausgestaltung des erfindungsgemäßen Feldgeräteadapters kann vorsehen, dass die Schaltung zum Kurzschließen des Kommunikationswiderstandes zumindest ein, vorzugsweise ein Transistor oder ein Analogschalter aufweisendes erstes Schaltelement umfasst, welches parallel zu dem Kommunikationswiderstand geschaltet ist und welches im überbrückten Zustand leitend geschaltet ist. Insbesondere kann die Ausgestaltung vorsehen, dass die Schaltung zum Kurzschließen des Kommunikationswiderstandes ferner ein zweites und ein drittes Schaltelement aufweist, wobei das zweite Schaltelement in einer das HART Modem mit der ersten Verbindungsleitung verbindenden dritten Verbindungsleitung angeordnet ist und das dritte Schaltelement in einer die dritte Verbindungsleitung mit der zweiten Verbindungsleitung verbindenden vierten Verbindungsleitung angeordnet ist, und wobei die Adapterelektronik dazu eingerichtet ist, in dem überbrückten Zustand in dem überbrückten Zustand das zweite Schaltelement sperrend und das dritte und vierte Schaltelement abhängig von einer Einbauposition eines externen HART Kommunikationswiderstands (36) zu schalten. Ergänzend kann die Ausgestaltung vorsehen, dass die Adapterelektronik ferner ein von außerhalb des Adaptergehäuses kontaktierbares fünftes Anschlusselement aufweist, welches über ein viertes Schaltelement mit der dritten Verbindungsleitung verbunden ist, und wobei die Adapterelektronik dazu eingerichtet ist, in dem überbrückten Zustand das zweite und dritte Schaltelement jeweils sperrend und das vierte Schaltelement leitend zu schalten, sodass über das fünfte Anschlusselement eine Überbrückungsleitung an die erste Zweidrahtleitung anschließbar ist. Alternativ kann die Ausgestaltung vorsehen, dass die Adapterelektronik ferner ein von außerhalb des Adaptergehäuses kontaktierbares fünftes Anschlusselement aufweist, welches über ein viertes Schaltelement mit der dritten Verbindungsleitung verbunden ist, und wobei die Adapterelektronik dazu eingerichtet ist, in dem überbrückten Zustand das zweite Schaltelement sperrend und das dritte Schaltelement und vorzugsweise auch das vierte Schaltelement abhängig von einer Einbauposition eines externen HART Kommunikationswiderstands zu schalten.

Eine weitere vorteilhafte Ausgestaltung des erfindungsgemäßen Feldgeräteadapters kann vorsehen, dass die Adapterelektronik ferner dazu eingerichtet ist, in einem abgeschalteten Zustand, in dem keine durch den Feldgeräteadapter initiierte HART Kommunikation möglich ist bzw. sein soll, das erste Schaltelement leitend, das zweite Schaltelement und vorzugsweise auch das dritte Schaltelement sperrend zu schalten.

Eine weitere vorteilhafte Ausgestaltung des erfindungsgemäßen Feldgeräteadapters kann vorsehen, dass die Adapterelektronik ein zweites Funkmodul (als eine separate Konfigurationsschnittstelle) mit einer Antenne zum Empfangen des zweiten Funksignals umfasst, wobei die Versorgungschaltung das zweite Funkmodul durch die Versorgungsspannung mit Energie versorgt und das zweite Funkmodul dazu eingerichtet ist, die Schaltung zum Kurzschließen des Kommunikationswiderstandes anhand des zweiten Funksignals zu steuern, und wobei das zweite Funkmodul dazu eingerichtet ist, das zweite Funksignal gemäß einer funkbasierten Punkt-zu-Punkt Verbindung, vorzugsweise eine Bluetooth-, eine Bluetooth Low Energy-, eine NFC- oder eine RFID-Verbindung, zu empfangen.

Eine weitere vorteilhafte Ausgestaltung des erfindungsgemäßen Feldgeräteadapters kann vorsehen, dass die Adapterelektronik ein erstes Funkmodul mit einer Antenne zum Senden und/oder Empfangen des ersten Funksignals umfasst, wobei die Versorgungschaltung das erste Funkmodul durch die Versorgungsspannung mit Energie versorgt und das erste Funkmodul dazu eingerichtet ist, das Zweileitersignal in das erste Funksignal zu übersetzen und umgekehrt, wobei das erste Funkmodul ferner dazu eingerichtet ist, das erste Funksignal gemäß eines der folgenden Funkprotokolle bzw. Funktechnologien auszusenden bzw. zu empfangen:
- ein Bluetooth-Protokoll oder einer davon abgewandelten Variante,
- ein 6LoWPAN-Protokoll,
- ein WirelessHART-Protokoll,
- ein 6TiSCH-Protokoll, und/oder
- einem auf einer Mobilfunktechnologie aufbauenden Protokoll, vorzugsweise 2G, 3G, LTE oder 5G, besonders bevorzugt NB-loT.

Die Erfindung betrifft weiterhin ein System der Automatisierungstechnik, aufweisend:
- zumindest ein Feldgeräteadapter nach einem oder mehreren der vorhergehenden Ansprüche;
- zumindest eine übergeordnete Einheit;
- zumindest ein Feldgerät der Automatisierungstechnik mit einer in einem Feldgerätegehäuse angeordneten Feldgeräteelektronik;
- eine erste Zweidrahtleitung, die die Adapterelektronik über das erste und zweite Anschlusselement elektrisch an die Feldgeräteelektronik anschließt;
- eine zweite Zweidrahtleitung, die die Adapterelektronik über das dritte und vierte Anschlusselement elektrisch an die übergeordnete Einheit anschließt;
- eine mobile Bedieneinheit die dazu eingerichtet ist, mit Hilfe des zweiten Funksignals die Schaltung zum Kurzschließen des Kommunikationswiderstandes derartig zu steuern, dass zumindest der Kommunikationswiderstand per Funk selektiv zu- oder abschaltbar ist.

Eine vorteilhafte Ausgestaltung des erfindungsgemäßen Systems kann vorsehen, dass das System ferner einen in einer Plus-Ader der zweiten Zweidrahtleitung angeordneten HART Kommunikationswiderstand und eine Überbrückungsleitung umfasst, wobei die Überbrückungsleitung das fünfte Anschlusselement mit der Plus-Ader der zweiten Zweidrahtleitung im Bereich zwischen der Versorgungschaltung und der übergeordneten Einheit verbindet.

Eine alternative Ausgestaltung des erfindungsgemäßen Systems kann vorsehen, dass das System ferner einen in einer Minus-Ader der zweiten Zweidrahtleitung angeordneten HART Kommunikationswiderstand umfasst.

Die Erfindung wird anhand der nachfolgenden Zeichnungen näher erläutert. Es zeigt:
Fig. 1: eine schematische Darstellung eines Zweileiterfeldgerätes, wie es gegenwärtig in einer Vielzahl der bestehenden Automatisierungsanlagen vorzufinden ist und mit welchem rein drahtgebunden über eine Zweidrahtleitung Daten kommuniziert werden können,
Fig. 2: eine schematische Darstellung eines erfindungsgemäßen Feldgeräteadapters zur drahtlosen Datenübertragung,
Fig. 3a: eine erste schematisch dargestellte Konfiguration des erfindungsgemäßen Systems, und
Fig. 3b: eine zweite schematische dargestellte Konfiguration des erfindungsgemäßen Systems.

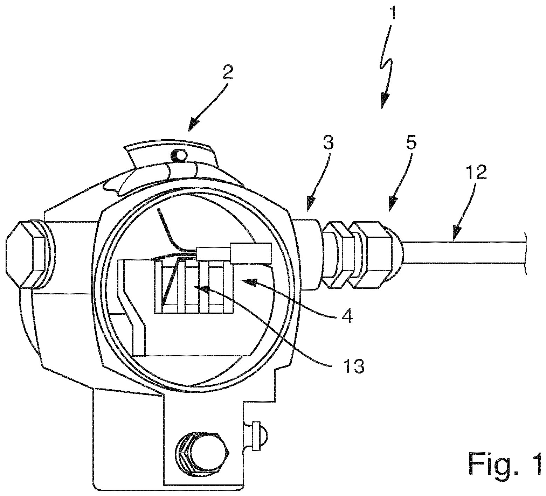

Figur 1 zeigt schematisch ein Zweileiterfeldgerät, welches ein metallisches Gehäuse 2 umfasst, indem eine Feldgeräteelektronik 4 angeordnet ist. Die Feldgeräteelektronik 4 ist derartig ausgebildet, dass diese Anschlussklemmen 13 aufweist, über die eine erste Zweidrahtleitung 12a mit einer Plus-Ader 12aa und einer Minus-Ader 12ab elektrisch angeschlossen ist. Über die erste Zweidrahtleitung wird die Feldgeräteelektronik 4 und somit das Feldgerät 1 an eine, in Fig. 1 nicht gesondert dargestellte, übergeordnete Einheit angeschlossen, um mit der übergeordneten Einheit Daten drahtgebunden zu kommunizieren. Hierbei werden die Mess- bzw. Stellwerte als Haupt-Prozessgröße über die erste Zweidrahtleitung 12a analog in Form eines 4-20 mA Stromsignals kommuniziert und alle anderen Daten werden in Form eines digitalen Zweileitersignals gemäß dem HART Standard übertragen.

Um die von außerhalb des Gehäuses 2 kommende erste Zweidrahtleitung 12a mit der im Gehäuse 2 angeordneten Feldgeräteelektronik 4 elektrisch kontaktieren zu können, weist das metallische Gehäuse 2 eine Gehäuseöffnung 3 auf. In die Gehäuseöffnung 3 ist eine Kabelverschraubung 5 eingebracht, so dass die erste Zweidrahtleitung 12a durch die Kabelverschraubung 5 in das Gehäuse 2 einbringbar ist. Die Kabelverschraubung 5 ist vorzugsweise in Form einer PG-Kabelverschraubung, d.h. eine Kabelverschraubung mit Stahlpanzerrohrgewinde, gemäß der im Mai 2014 veröffentlichten Norm DIN EN 62444 ausgebildet. Die Kabelverschraubung 5 kann bspw. als M20, d.h. einen Außendurchmesser von 20 mm aufweisende, PG-Kabelverschraubung ausgebildet sein.

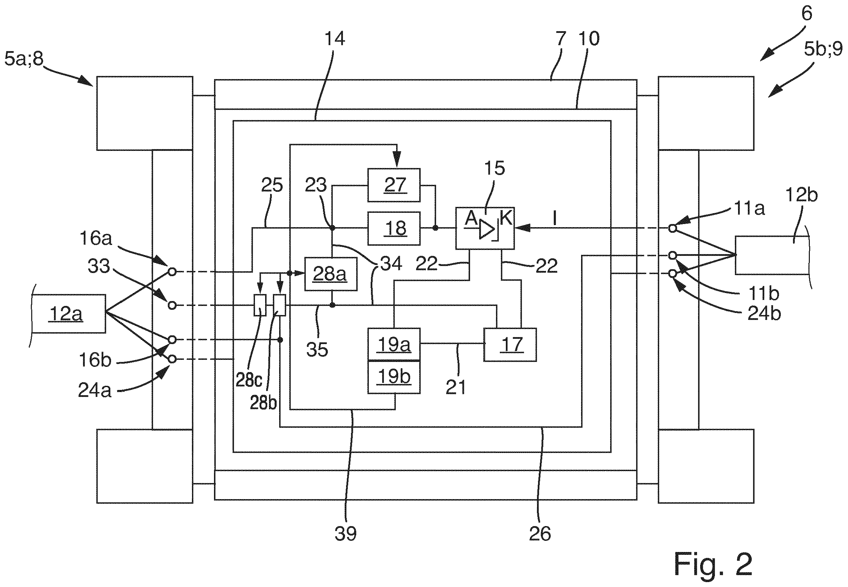

Fig. 2 zeigt eine schematische Darstellung eines erfindungsgemäßen Feldgeräteadapters 6 zur drahtlosen Datenübertragung. Der Feldgeräteadapter 6 umfasst ein Adaptergehäuse 7 mit einer Adapterkammer 10 und kann beispielsweise eine im Wesentlichen zylindrische Form aufweisen. Zum Anschließen jeweils einer ersten und zweiten Zweidrahtleitung 12a, 12b sind an den Stirnseiten des Adaptergehäuses 8, 9 jeweils Kontaktierungsmittel vorgesehen. An der ersten Stirnseite bzw. dem ersten Ende 8 sind ein erstes und ein zweites Anschlusselement 16a, 16b sowie ein Masseanschlusselement 24a zum Anschließen der ersten Zweidrahtleitung 12a vorgesehen. An der zweiten Stirnseite bzw. dem zweiten Ende 9 sind ein drittes und ein viertes Anschlusselement 11a, 11b sowie ein Masseanschluss 24b zum Anschließen der zweiten Zweidrahtleitung 12b vorgesehen. Ergänzend kann ein fünftes Anschlusselement 33 vorgesehen sein, welches zum Anschluss einer Überbrückungsleitung nach außen, bspw. an die erste oder zweite Stirnseite 8, 9 des Adaptergehäuses 7, geführt ist.

Das Adaptergehäuse 7 weist ferner in einer bevorzugten Ausgestaltung an den Stirnseiten 8, 9 jeweils eine Kabelverschraubung 5a und 5b auf, durch die die Zweidrahtleitungen 12a, 12b eingeführt werden. Das fünfte Anschlusselement 33 kann ebenfalls durch eine der beiden Kabelverschraubungen zugänglich sein. Die Kabelverschraubungen 5 sind vorzugsweise in Form einer PG-Kabelverschraubung, d.h. eine Kabelverschraubung mit Stahlpanzerrohrgewinde, gemäß der im Mai 2014 veröffentlichten Norm DIN EN 62444 ausgebildet. Die Kabelverschraubungen 5a, 5b können beispielsweise als M20, d.h. einen Außendurchmesser von 20 mm aufweisende, PG-Kabelverschraubung ausgebildet sein.

Ferner weist der Feldgeräteadapter 6 eine innerhalb der Adapterkammer 10 angeordnete Adapterelektronik 14 auf, die das erste Anschlusselement 16a mit dem dritten Anschlusselement 11a über eine erste elektrische Verbindungsleitung 25 und das zweite Anschlusselement 16b mit dem vierten Anschlusselement 11b über eine zweite elektrische Verbindungsleitung 26 verbindet. Über die erste elektrische Verbindungsleitung 25 wird ein Schleifenstrom I von der zweiten Zweidrahtleitung 12b zu der ersten Zweidrahtleitung 12a geführt.

Um eine Versorgungspannung zur Energieversorgung der Adapterelektronik 14 bereitzustellen, weist der Feldgeräteadapter 6 eine, vorzugsweise nicht geregelte Versorgungsschaltung 15 auf, d.h. eine Versorgungsschaltung die unabhängig von dem Schleifenstrom und/oder ohne eine Feedbackschaltung, eine definierte Versorgungsspannung bereitstellt. Die Versorgungsschaltung 15 kann, wie in Fig. 2 dargestellt, als ein Teil der Adapterelektronik 14 oder separat von der Adapterelektronik 14 ausgebildet sein. Die Versorgungsschaltung 15 umfasst zumindest eine Diode, die in die erste elektrische Verbindungsleitung 25 eingebracht ist und über die durch einen Spannungsabgriff eine Versorgungsspannung bereitgestellt wird. Beispielsweise kann eine Z-Diode bzw. Zener-Diode derartig in der ersten elektrischen Verbindungsleitung 25 angeordnet sein, dass eine Anode A sich in Richtung des ersten Anschlusselementes 16a und eine Kathode K sich in Richtung des dritten Anschlusselementes 11a befindet, sodass die Z-Diode in Sperrrichtung zu dem durch die erste elektrische Verbindungsleitung 25 fließenden Schleifenstrom I angeordnet ist und der Spannungsabgriff zwischen der Anode A und der Kathode K erfolgt.

Alternativ kann die Versorgungsschaltung 15 auch mehrere einzelne Dioden, die jeweils in Flussrichtung zu dem durch die erste elektrische Verbindungsleitung 25 fließenden Schleifenstrom I angeordnet sind, umfassen, wobei der Spannungsabgriff über die Anode der ersten Diode und die Kathode der letzten Diode erfolgt.

Die Adapterelektronik 14 ist an dem ersten Ende 8 mit den zwei Anschlusselementen 16a und 16b mit der ersten Zweidrahtleitung 12a und an dem zweiten Ende 9 mit den zwei Anschlusselementen 11a und 11b mit der zweiten Zweidrahtleitung 12b verbunden. Ferner kann die Adapterelektronik über einen ersten und zweiten Masseanschluss 24a und 24b mit einer Masseleitung der ersten bzw. zweiten Zweidrahtleitung verbunden sein.

Die Adapterelektronik 14 ist ferner dazu eingerichtet, dass ein auf den Schleifenstrom aufmoduliertes Zweileitersignal, welches gemäß dem HART Standard ausgebildet ist und welches zwischen einem über die erste Zweidrahtleitung angeschlossenen Feldgerät und einer über die zweite Zweidrahtleitung angeschlossenen übergeordneten Einheit kommuniziert wird, in beide Richtungen weiterzuleiten. Ferner ist die Adapterelektronik 14 dazu eingerichtet, die aufmodulierten Zweileitersignale über einen zwischen dem ersten Anschlusselement 16a und der Versorgungsschaltung 15 in die erste elektrische Verbindungsleitung 25 eingebrachten Abgriffspunkt 23 abzugreifen, in Funksignale zu übersetzen und per Funk auszusenden. Hierzu weist die Adapterelektronik 14 ein erstes Funkmodul 19a mit einer Antenne auf. Das erste Funkmodul 19a dient sowohl dazu, dass bereits auf den Schleifenstrom aufmodulierte Zweileitersignal zu versenden als auch umgekehrt Zweileitersignale repräsentieren Funksignale drahtlos zu empfangen und in ein entsprechendes Zweileitersignal zu wandeln, sodass es auf den Schleifenstrom auf moduliert werden kann. Auf diese Weise kann über den Feldgeräteadapter mit dem Feldgerät mittels einer HART Kommunikation kommuniziert werden.

Das erste Funkmodul 19a wird ebenfalls durch die Versorgungsschaltung 15 mit Energie versorgt. Das erste Funkmodul 19a ist derartig ausgebildet, dass insbesondere Funksignale gemäß einem Bluetooth-Protokoll oder einer davon abgewandelten Variante, einem 6LoWPAN-Protokoll, einem WirelessHART-Protokoll, und/oder einem 6TiSCH-Protokoll, übertragbar sind.

Die Adapterelektronik 14 umfasst ferner zum Umsetzen der aufmodulierten Zweileitersignale in zur Übertragung mittels dem ersten Funkmodul 19a geeigneter Signale und umgekehrt ein HART-Modem 17, welches zur Kommunikation mit der Funkeinheit 19 bspw. mittels einer seriellen Schnittstelle 21, bspw. UART, verbunden ist. Das HART-Modem 17 wird ebenfalls durch die Versorgungsschaltung 15 mit Energie versorgt.

Damit der Adapterelektronik 14 die aufmodulierten Zweileitersignale über den Abgriffspunkt 23 zugeführt oder auf den Schleifenstrom I aufmoduliert werden können, ist ferner ein Kommunikationswiderstand 18 in der ersten elektrischen Verbindungsleitung 25 vorgesehen. Über den Kommunikationswiderstand 18 wird eine gemäß dem zu übertragenden Zweileitersignal entsprechende Spannungsmodulation realisiert. Der Kommunikationswiderstand 18 ist hierbei zwischen der Versorgungsschaltung 15 und dem Abgriffspunkt 23 in der ersten elektrischen Verbindungsleitung 25 angeordnet.

Damit die Adapterelektronik 14 digitale Zweileitersignale zu dem Feldgerät 1 kommunizieren kann, ist das HART Modem 17 als ein sekundärer Master eingerichtet. Auf diese Weise lässt sich bspw. ein Feldgerät 1 drahtlos per Funk über den Feldgeräteadapter parametrieren, indem die drahtlos durch das erste Funkmodul 19a empfangenen Funksignale mittels des HART-Modems 17 umgewandelt und über den Abgriffspunkt 23 auf den Schleifenstrom aufmoduliert werden.

Erfindungsgemäß umfasst die Adapterelektronik ferner eine Schaltung zum Überbrücken des Kommunikationswiderstandes, für den Fall, dass bereits ein externer HART Kommunikationswiderstand in der Zweidrahtleitung eingebracht ist. Die Schaltung zum Überbrücken des Kommunikationswiderstandes 18 umfasst ein erstes Schaltelement 27, bspw. einen Transistor oder einen Analogschalter, der parallel zu dem Kommunikationswiderstand des Feldgeräteadapters 6 geschaltet ist, sodass sich über das erste Schaltelement 27 der Kommunikationswiderstand 18 in einem überbrückten Zustand kurzschließen lässt. Gleichfalls lässt sich das erste Schaltelement 27 in einen nicht überbrückten Zustand sperrend schalten, sodass der Kommunikationswiderstand 18 nicht kurzgeschlossen ist und dieser für die HART Kommunikation verwendet werden kann.

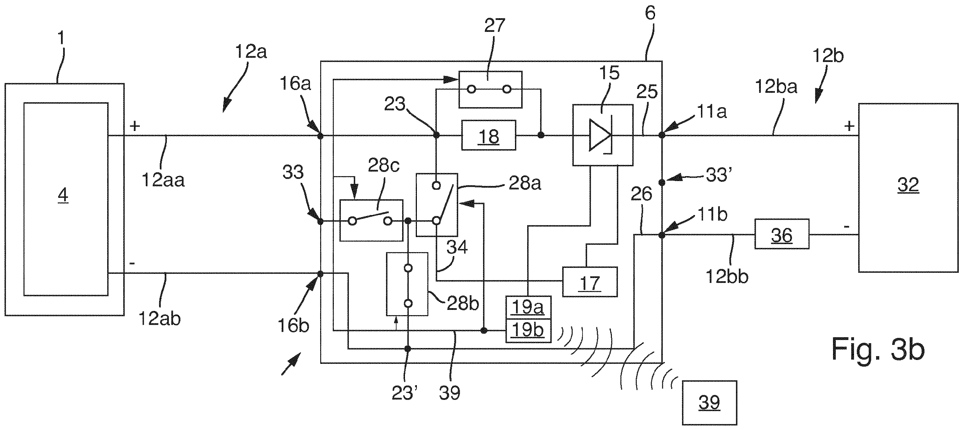

Ergänzend kann die Schaltung zum Kurzschließen des Kommunikationswiderstandes ferner ein zweites und ein drittes Schaltelement 28a, 28b aufweisen. Über das zweite und dritte Schaltelement 28a, 28b lässt sich, in dem Fall, dass bereits ein externer HART Kommunikationswiderstand 36 in der Zweidrahtleitung vorhanden ist und der Kommunikationswiderstand 18 im überbrückten Zustand kurzgeschlossen ist, der zur HART Kommunikation notwendige Abgriffspunkt entsprechend verändern bzw. anpassen. Hierzu ist das zweite Schaltelement 28a in einer das HART Modem 17 mit der ersten Verbindungsleitung 25 verbindenden dritten Verbindungsleitung 34 angeordnet und das dritte Schaltelement 28b in einer die dritte Verbindungsleitung 34 mit der zweiten Verbindungsleitung 26 verbindenden vierten Verbindungsleitung 35 angeordnet. Auf diese Weise kann, wenn bereits ein externer HART Kommunikationswiderstand in einer Minus-Ader 12ab, 12ba der ersten oder zweiten Zweidrahtleitung 12a, 12b vorhanden ist, der Abgriffspunkt 23 zur zweiten Verbindungsleitung 26 geschaltet werden. Fig. 3b zeigt exemplarisch eine solche Konfiguration. Der bereits eingebrachte externe HART Kommunikationswiderstand 36 dient eigentlich dazu, eine HART Kommunikation zwischen dem Feldgerät 1 und einer übergeordneten Einheit 32 zu realisieren.

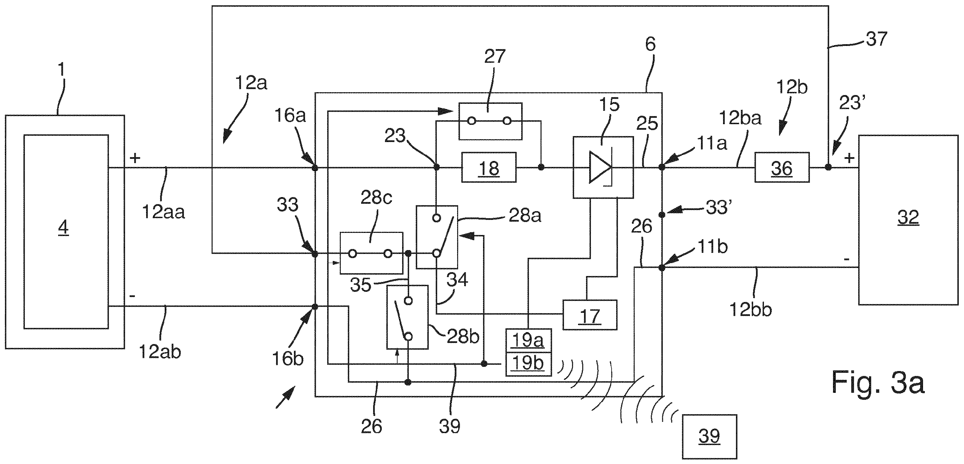

Fig. 3a zeigt eine andere Konfiguration gemäß derer der HART Kommunikationswiderstand in eine Plus-Ader 12aa der ersten Zweidrahtleitung 12a angeordnet ist. Um den zur HART Kommunikation notwendigen Abgriffspunkt in den Leitungsbereich zwischen dem bereits vorhandenen HART Kommunikationswiderstand 36 und der Feldgeräteelektronik 4 zu legen, ist in der Adapterelektronik ein von außerhalb des Adaptergehäuses kontaktierbares fünftes Anschlusselement 33 vorgesehen. Das fünfte Anschlusselement 33 kann bspw. in einer der beiden Stirnflächen angeordnet und über ein viertes Schaltelement 28c mit der dritten Verbindungsleitung 34 verbunden sein. Über das fünfte Anschlusselement 33 kann mittels einer externen Überbrückungsleitung 37 der Abgriffspunkt 23 mit dem Leitungsbereich zwischen dem bereits vorhandenen HART Kommunikationswiderstand 36 und der Feldgeräteelektronik 4 kontaktiert werden. In Fig. 3a ist die Kontaktierung des Abgriffspunkts mit dem Leitungsbereich exemplarisch mit dem Bezugszeichen 23' dargestellt. Das vierte Schaltelement 28c dient dazu, in dem Fall, dass das fünfte Anschlusselement nicht benötigt wird, da bspw. der Anschluss des Feldgeräteadapters gemäß der in Fig. 3b dargestellten Konfiguration ausgeführt wird, diesen zu deaktivieren.

Ergänzend oder alternativ kann über das erste und zweite Schaltelement 27 und 28a die HART Kommunikation durch den Feldgeräteadapter deaktiviert werden, sodass keine Zweileitersignale über den Abgriffspunkt aufmoduliert werden können. Hierzu wird das erste Schaltelement 27 leitend und das zweite Schaltelement 28a sperrend geschaltet. Eine zwischen dem Feldgerät und der übergeordneten Einheit stattfindende HART-Kommunikation bleibt davon unberührt.

Um die einzelnen Schaltelemente zu steuern, ist eine elektrische Steuerleitung 39 vorgesehen, die die Schaltelemente mit einem zweiten Funkmodul 19b verbindet. Das zweite Funkmodul 19b ist dazu eingerichtet, ein zweites zum Steuern der Schaltung vorgesehenes Funksignal drahtlos zu empfangen und mittels des zweiten Funksignals die Schaltelemente entsprechend zu schalten. Die drahtlose Übertragung des zweiten Funksignals 19b erfolgt bevorzugt über eine funkbasierte Punkt-zu-Punkt Verbindung, bspw. eine Bluetooth-, eine Bluetooth Low Energy-, eine NFC- oder eine RFID-Verbindung. Das zweite Funkmodul 19b kann, wie in Fig. 2 dargestellt, als separates Funkmodul ausgebildet sein. Alternativ können das erste und zweite Funkmodul 19a, 19b als ein einziges Modul ausgebildet sein.
- 28c: Viertes Schaltelement
- 31: Automatisierungsanlage
- 32: Übergeordnete Einheit
- 33: Fünftes Anschlusselement
- 34: Dritte Verbindungsleitung
- 35: Vierte Verbindungsleitung
- 36: Externer HART Kommunikationswiderstand
- 37: Überbrückungsleitung
- 38: Mobile Bedieneinheit
- 39: Elektrische Steuerleitung

## Patentansprüche

1. Feldgeräteadapter (6) zur HART Kommunikation mit einem Feldgerät (1), zumindest aufweisend:
- ein Adaptergehäuse (7) mit einem ersten Ende (8) und einem zweiten Ende (9), wobei das erste Ende (8) zumindest ein erstes Anschlusselement (16a) und ein zweites Anschlusselement (16b) zum elektrischen Anschließen einer ersten Zweidrahtleitung (12a) und das zweite Ende (9) zumindest ein drittes Anschlusselement (11a) und ein viertes Anschlusselement (11b) zum elektrischen Anschließen einer zweiten Zweidrahtleitung (12b) aufweist, wobei das Adaptergehäuse (7) ferner eine Adapterkammer (10) zwischen dem ersten und dem zweiten Ende (8, 9) aufweist;
**dadurch gekennzeichnet, dass**
- eine in der Adapterkammer (10) angeordnete Adapterelektronik (14) vorgesehen ist, die das erste Anschlusselement (16a) mit dem dritten Anschlusselement (11a) durch eine erste elektrische Verbindungsleitung (25) und das zweite Anschlusselement (16b) mit dem vierten Anschlusselement (11b) durch eine zweite elektrische Verbindungsleitung (26) verbindet, wobei die Adapterelektronik (14) ferner einen in die erste Verbindungsleitung (25) eingebrachten Kommunikationswiderstand (18) und eine, vorzugsweise ungeregelte bzw. nicht geregelte Versorgungschaltung (15) zum Bereitstellen einer Versorgungsspannung aus einem in der ersten Verbindungsleitung (25) fließenden Schleifenstrom (I) umfasst, wobei die Adapterelektronik (14) ferner ein als sekundärer Master eingerichtetes HART-Modem (17), welches über einen Abgriffspunkt (23) mit der ersten Verbindungsleitung (25) verbunden ist, und eine Schaltung zum Kurzschließen des Kommunikationswiderstandes (18) aufweist, wobei die Adapterelektronik dazu eingerichtet ist, ein zweites Funksignal drahtlos zu empfangen und mittels des zweiten Funksignals die Schaltung zum Kurzschließen des Kommunikationswiderstandes (18) derartig zu steuern, dass zumindest der Kommunikationswiderstand (18) per Funk selektiv zu- oder abschaltbar ist, sodass in einem überbrückten Zustand ein durch die Adapterelektronik (14) empfangenes erstes Funksignal in ein, vorzugsweise HART basiertes Zweileitersignal übersetzt und über den Abgriffspunkt (23) auf den Schleifenstrom (I) aufmoduliert werden kann.

2. Feldgeräteadapter nach Anspruch 1, wobei die Schaltung zum Kurzschließen des Kommunikationswiderstandes zumindest ein, vorzugsweise ein Transistor oder ein Analogschalter aufweisendes erstes Schaltelement (27) umfasst, welches parallel zu dem Kommunikationswiderstand (18) geschaltet ist und welches im überbrückten Zustand leitend geschaltet ist.

3. Feldgeräteadapter nach dem vorhergehenden Anspruch, wobei die Schaltung zum Kurzschließen des Kommunikationswiderstandes ferner ein zweites und ein drittes Schaltelement (28a, 28b) aufweist, wobei das zweite Schaltelement (28a) in einer das HART Modem (17) mit der ersten Verbindungsleitung (25) verbindenden dritten Verbindungsleitung (34) angeordnet ist und das dritte Schaltelement (28b) in einer die dritte Verbindungsleitung (34) mit der zweiten Verbindungsleitung (26) verbindenden vierten Verbindungsleitung (35) angeordnet ist, und wobei die Adapterelektronik (14) dazu eingerichtet ist, in dem überbrückten Zustand das zweite Schaltelement (28a) sperrend und das dritte und vierte Schaltelement (28b, 28c) abhängig von einer Einbauposition eines externen HART Kommunikationswiderstands (36) zu schalten.

4. Feldgeräteadapter nach dem vorhergehenden Anspruch, wobei die Adapterelektronik (14) ferner ein von außerhalb des Adaptergehäuses (7) kontaktierbares fünftes Anschlusselement (33) aufweist, welches über ein viertes Schaltelement (28c) mit der dritten Verbindungsleitung (34) verbunden ist, und wobei die Adapterelektronik (14) dazu eingerichtet ist, in dem überbrückten Zustand das zweite und dritte Schaltelement (28a, 28b) jeweils sperrend und das vierte Schaltelement (28c) leitend zu schalten, sodass über das fünfte Anschlusselement (33) eine Überbrückungsleitung (37) an die erste Zweidrahtleitung (12a) anschließbar ist.

5. Feldgeräteadapter nach Anspruch 3, wobei die Adapterelektronik (14) ferner ein von außerhalb des Adaptergehäuses (7) kontaktierbares fünftes Anschlusselement (33) aufweist, welches über ein viertes Schaltelement (28c) mit der dritten Verbindungsleitung (34) verbunden ist, und wobei die Adapterelektronik (14) dazu eingerichtet ist, in dem überbrückten Zustand das zweite Schaltelement (28a) sperrend und das dritte Schaltelement (28b) und vorzugsweise auch das vierte Schaltelement (28c) abhängig von einer Einbauposition eines externen HART Kommunikationswiderstands (36) zu schalten.

6. Feldgeräteadapter nach zumindest einem der Ansprüche 3 bis 5, wobei die Adapterelektronik (14) ferner dazu eingerichtet ist, in einem abgeschalteten Zustand, in dem keine durch den Feldgeräteadapter initiierte HART Kommunikation möglich ist bzw. sein soll, das erste Schaltelement (27) leitend, das zweite Schaltelement (28a) und vorzugsweise auch das dritte Schaltelement (28c) sperrend zu schalten.

7. Feldgeräteadapter nach einem der vorhergehenden Ansprüche, wobei die Adapterelektronik (14) ein zweites Funkmodul (19b) mit einer Antenne zum Empfangen des zweiten Funksignals umfasst, wobei die Versorgungschaltung (15) das zweite Funkmodul (19b) durch die Versorgungsspannung mit Energie versorgt und das zweite Funkmodul (19b) dazu eingerichtet ist, die Schaltung zum Kurzschließen des Kommunikationswiderstandes anhand des zweiten Funksignals zu steuern, und wobei das zweite Funkmodul vorzugsweise dazu eingerichtet ist, das zweite Funksignal gemäß einer funkbasierten Punkt-zu-Punkt-Verbindung, vorzugsweise einer Bluetooth-, einer Bluetooth Low Energy-, NFC- oder RFID-Verbindung, zu empfangen.

8. Feldgeräteadapter nach einem der vorhergehenden Ansprüche, wobei die Adapterelektronik (14) ein erstes Funkmodul (19a) mit einer Antenne zum Senden und/oder Empfangen des ersten Funksignals umfasst, wobei die Versorgungschaltung (15) das erste Funkmodul (19a) durch die Versorgungsspannung mit Energie versorgt und das erste Funkmodul (19a) dazu eingerichtet ist, das Zweileitersignal in das erste Funksignal zu übersetzen und umgekehrt, wobei das erste Funkmodul ferner dazu eingerichtet ist, das erste Funksignal gemäß eines der folgenden Funkprotokolle bzw. Funktechnologien auszusenden bzw. zu empfangen:
- ein Bluetooth-Protokoll oder einer davon abgewandelten Variante,
- ein 6LoWPAN-Protokoll,
- ein WirelessHART-Protokoll,
- ein 6TiSCH-Protokoll, und/oder
- einem auf einer Mobilfunktechnologie aufbauenden Protokoll, vorzugsweise 2G, 3G, LTE oder 5G, besonders bevorzugt NB-loT.

9. System der Automatisierungstechnik (1) aufweisend:
- zumindest ein Feldgeräteadapter (6) nach einem oder mehreren der vorhergehenden Ansprüche;
- zumindest eine übergeordnete Einheit (32);
- zumindest ein Feldgerät der Automatisierungstechnik (1) mit einer in einem Feldgerätegehäuse (2) angeordneten Feldgeräteelektronik (4);
- eine erste Zweidrahtleitung (12a), die die Adapterelektronik (14) über das erste und zweite Anschlusselement (16a, 16b) elektrisch an die Feldgeräteelektronik (4) anschließt;
- eine zweite Zweidrahtleitung (12b), die die Adapterelektronik (14) über das dritte und vierte Anschlusselement (11a, 11b) elektrisch an die übergeordnete Einheit (32) anschließt;
- eine mobile Bedieneinheit (39) die dazu eingerichtet ist, mit Hilfe des zweiten Funksignals die Schaltung zum Kurzschließen des Kommunikationswiderstandes derartig zu steuern, dass zumindest der Kommunikationswiderstand (18) per Funk selektiv zu- oder abschaltbar ist.

10. System nach dem vorhergehenden Anspruch, wobei der zumindest eine Feldgeräteadapter (6) nach Anspruch 4 ausgebildet ist, und wobei das System ferner einen in einer Plus-Ader der zweiten Zweidrahtleitung (12ba) angeordneten HART Kommunikationswiderstand (36) und die Überbrückungsleitung (37) umfasst, wobei die Überbrückungsleitung (37) das fünfte Anschlusselement (33) mit der Plus-Ader der zweiten Zweidrahtleitung (12ba) im Bereich zwischen der Versorgungschaltung (15) und der übergeordneten Einheit (32) verbindet.

11. System nach Anspruch 9, wobei der zumindest eine Feldgeräteadapter (6) nach Anspruch 5 ausgebildet ist, und wobei das System ferner einen in einer Minus-Ader der zweiten Zweidrahtleitung (12bb) angeordneten HART Kommunikationswiderstand (36) umfasst.

## Claims

1. A field device adapter (6) for HART communication with a field device (1), having at least:
- an adapter housing (7) with a first end (8) and a second end (9), wherein the first end (8) has at least a first connecting element (16a) and a second connecting element (16b) for electrically connecting a first two-wire cable (12a), and the second end (9) has a least a third connecting element (11a) and a fourth connecting element (11b) for electrically connecting a second two-wire cable (12b), wherein the adapter housing (7) also has an adapter chamber (10) between the first and second ends (8, 9);
**characterized in that**
- adapter electronics (14) arranged in the adapter chamber (10) are provided, which connect the first connecting element (16a) to the third connecting element (11a) via a first electrical connecting cable (25) and which connect the second connecting element (16b) to the fourth connecting element (11b) via a second electrical connecting cable (26), wherein the adapter electronics (14) also comprise a communication resistor (18) housed in the first connecting cable (25) and a preferably unregulated or not regulated power supply circuit (15) for supplying a supply voltage from a loop current (I) flowing in the first connecting cable (25), wherein the adapter electronics (14) also have a HART modem (17) configured as a secondary master, which is connected to the first connecting cable (25) via a tapping point (23), and a circuit for short-circuiting the communication resistor (18), wherein the adapter electronics are configured to wirelessly receive a second radio signal and control the circuit for short-circuiting the communication resistor (18) using the second radio signal in such a way that at least the communication resistor (18) can be selectively activated or deactivated wirelessly so that, in a bridged state, a first radio signal received by the adapter electronics (14) is converted to a preferably HART-based two-conductor signal and can be modulated to the loop current (I) via the tapping point (23).

2. The field device adapter as claimed in claim 1, wherein the circuit for short-circuiting the communication resistor comprises at least a first switching element switching element (27) having preferably a transistor or an analogue switch which is switched in parallel with the communication resistor (18) and which is switched to conductive in the bridged state

3. The field device adapter as claimed in the preceding claim, wherein the circuit for short-circuiting the communication resistor also has a second and third switching element (28a, 28b), wherein the second switching element (28a) is arranged in a third connecting cable (34) which connects the HART modem (17) to the first connecting cable (25), and the third switching element (28b) is arranged in a fourth connecting cable (35) which connects the third connecting cable (34) to the second connecting cable (26), and wherein the adapter electronics (14) are configured to switch the second switching element (28a) to blocked in the bridged state and to switch the third and fourth switching elements (28b, 28c) depending on an installation position of an external HART communication resistor (36).

4. The field device adapter as claimed in the preceding claim, wherein the adapter electronics (14) also have a fifth connecting element which can be contacted from outside the adapter housing (7) and which is connected to the third connecting cable via a fourth switching element (28c), and wherein the adapter electronics (14) are configured to switch the second and third switching elements (28a, 28b) to blocked in the bridged state and to switch the fourth switching element (28c) to conductive so that a jumper cable (37) can be connected to the first two-wire cable (12a) via the fifth connecting element (33).

5. The field device adapter as claimed in claim 3, wherein the adapter electronics (14) also have a fifth connecting element (33) which can be contacted from outside the adapter housing (7) and which is connected to the third connecting cable (34) via a fourth switching element (28c), and wherein the adapter electronics (14) are configured to switch the second switching element (28a) to blocked in the bridged state and to switch the third switching element (28b) and preferably also the fourth switching element (28c) depending on an installation position of an external HART communication resistor (36).

6. The field device adapter as claimed in at least one of claims 3 to 5, wherein the adapter electronics (14) are also configured to switch the first switching element (27) to conductive and the second switching element (28a) and preferably also the third switching element (28c) to blocked in a deactivated state in which no HART communication initiated by the field device adapter is possible or should be possible.

7. The field device adapter as claimed in one of the preceding claims, wherein the adapter electronics (14) comprise a second radio module (19b) with an antenna for receiving the second radio signal, wherein the power supply circuit (15) supplies the second radio module (19b) with power via the supply voltage, and the second radio module (19b) is configured to control the circuit for short-circuiting the communication resistor using the second radio signal, and wherein the second radio module is preferably configured to receive the second radio signal according to a wireless point-to-point connection, preferably a Bluetooth, Bluetooth Low Energy, NFC or RFID connection.

8. The field device adapter as claimed in one of the preceding claims, wherein the adapter electronics (14) comprise a first radio module (19a) with an antenna for transmitting and/or receiving the first radio signal, wherein the power supply circuit (15) supplies the first radio module (19a) with power via the supply voltage, and the first radio module (19a) is configured to convert the two-conductor signal to the first radio signal and vice versa, wherein the first radio module is also configured to transmit and/or receive the first radio signal according to one of the following wireless protocols or wireless technologies:
- a Bluetooth protocol or a modified version of it,
- a 6LoWPAN protocol,
- a WirelessHART protocol,
- a 6TiSCH protocol, and/or
- a protocol based on a mobile communications technology, preferably 2G, 3G, LTE or 5G, particularly preferably NB-loT.

9. An automation system (1) having:
- at least a field device adapter (6) as claimed in one or more of the preceding claims;
- at least a higher-level unit (32);
- at least an automation field device (1) with field device electronics (4) arranged in a field device housing (2);
- a first two-wire cable (12a) which electrically connects the adapter electronics (14) to the field device electronics (4) via the first and second connecting elements (16a, 16b);
- a second two-wire cable (12b) which electrically connects the adapter electronics (14) to the higher-level unit (32) via the third and fourth connecting elements (11a, 11b);
- a mobile control unit (39) which is configured to control the circuit for short-circuiting the communication resistor using the second radio signal in such a way that at least the communication resistor (18) can be selectively activated or deactivated wirelessly.

10. The system as claimed in the preceding claim, wherein the at least one field device adapter (6) is configured as claimed in claim 4, and wherein the system also comprises a HART communication resistor (36) arranged in a positive conductor of the second two-wire cable (12ba) and the jumper cable (37), wherein the jumper cable (37) connects the fifth connecting element (33) to the positive conductor of the second two-wire cable (12ba) in the area between the power supply circuit (15) and the higher-level unit (32).

11. The system as claimed in claim 9, wherein the at least one field device adapter (6) is configured as claimed in claim 5, and wherein the system also comprises a HART communication resistor (36) arranged in a negative conductor of the second two-wire cable (12bb).

## Revendications

1. Adaptateur d'appareil de terrain (6) destiné à la communication HART avec un appareil de terrain (1), lequel adaptateur comprend au moins :
- un boîtier d'adaptateur (7) avec une première extrémité (8) et une deuxième extrémité (9), la première extrémité (8) présentant au moins un premier élément de raccordement (16a) et un deuxième élément de raccordement (16b) pour raccorder électriquement une première ligne bifilaire (12a) et la deuxième extrémité (9) présentant au moins un troisième élément de raccordement (11a) et un quatrième élément de raccordement (11b) pour raccorder électriquement une deuxième ligne bifilaire (12b), le boîtier d'adaptateur (7) comprenant en outre une chambre d'adaptateur (10) entre la première et la deuxième extrémité (8, 9) ; **caractérisé en ce qu'**
- est prévue une électronique d'adaptateur (14) disposée dans la chambre d'adaptateur (10), laquelle électronique relie le premier élément de raccordement (16a) au troisième élément de raccordement (11a) par une première ligne de liaison électrique (25) et le deuxième élément de raccordement (16b) au quatrième élément de raccordement (11b) par une deuxième ligne de liaison électrique (26), l'électronique d'adaptateur (14) comprenant en outre une résistance de communication (18) introduite dans la première ligne de liaison (25) et un circuit d'alimentation, de préférence non régulé, lequel circuit est destiné à fournir une tension d'alimentation à partir d'un courant de boucle (I) circulant dans la première ligne de liaison (25), l'électronique d'adaptateur (14) présentant en outre un modem HART (17) configuré comme maître secondaire, lequel modem est relié à la première ligne de liaison (25) par un point de prise (23), et un circuit de pontage de la résistance de communication (18), l'électronique d'adaptateur étant conçue pour recevoir sans fil un deuxième signal radio et, au moyen du deuxième signal radio, commander le circuit de pontage de la résistance de communication (18) de telle sorte qu'au moins la résistance de communication (18) puisse être activée ou désactivée sélectivement par liaison radio, de sorte que, dans un état ponté, un premier signal radio reçu par l'électronique d'adaptateur (14) peut être converti en un signal bifilaire, de préférence basé sur HART, et modulé sur le courant de boucle (I) via le point de prise (23).

2. Adaptateur d'appareil de terrain selon la revendication 1, pour lequel le circuit de pontage de la résistance de communication comprend au moins un premier élément de commutation (27) présentant de préférence un transistor ou un commutateur analogique, lequel élément est monté en parallèle avec la résistance de communication (18) et lequel élément est commuté à l'état conducteur à l'état ponté de la résistance.

3. Adaptateur d'appareil de terrain selon la revendication précédente, pour lequel le circuit de pontage de la résistance de communication comprend en outre un deuxième et un troisième élément de commutation (28a, 28b), le deuxième élément de commutation (28a) étant disposé dans une troisième ligne de liaison (34) reliant le modem HART (17) à la première ligne de liaison (25) et le troisième élément de commutation (28b) étant disposé dans une quatrième ligne de liaison (35) reliant la troisième ligne de liaison (34) à la deuxième ligne de liaison (26), et l'électronique d'adaptateur (14) étant conçue pour, dans l'état ponté, commuter à l'état bloqué le deuxième élément de commutation (28a) et commuter le troisième et le quatrième élément de commutation (28b, 28c) en fonction d'une position de montage d'une résistance de communication HART externe (36).

4. Adaptateur d'appareil de terrain selon la revendication précédente, pour lequel l'électronique d'adaptateur (14) présente en outre un cinquième élément de raccordement (33) pouvant être mis en contact de l'extérieur du boîtier d'adaptateur (7), lequel élément est relié à la troisième ligne de liaison (34) par un quatrième élément de commutation (28c), et l'électronique d'adaptateur (14) étant conçue pour, dans l'état ponté, commuter le deuxième et le troisième élément de commutation (28a, 28b) respectivement à l'état bloqué et le quatrième élément de commutation (28c) à l'état conducteur, de sorte qu'une ligne de pontage (37) peut être raccordée à la première ligne bifilaire (12a) via le cinquième élément de raccordement (33).

5. Adaptateur d'appareil de terrain selon la revendication 3, pour lequel l'électronique d'adaptateur (14) présente en outre un cinquième élément de raccordement (33) pouvant être mis en contact de l'extérieur du boîtier d'adaptateur (7), lequel élément est relié à la troisième ligne de liaison (34) par l'intermédiaire d'un quatrième élément de commutation (28c), et l'électronique d'adaptateur (14) étant conçue pour, dans l'état ponté, commuter le deuxième élément de commutation (28a) à l'état bloqué et le troisième élément de commutation (28b) et de préférence également le quatrième élément de commutation (28c) en fonction d'une position de montage d'une résistance de communication HART externe (36).

6. Adaptateur d'appareil de terrain selon au moins l'une des revendications 3 à 5, pour lequel l'électronique d'adaptateur (14) est en outre conçue pour - dans un état désactivé dans lequel aucune communication HART initiée par l'adaptateur d'appareil de terrain n'est ou ne doit être possible - commuter le premier élément de commutation (27) à l'état conducteur, le deuxième élément de commutation (28a) et de préférence également le troisième élément de commutation (28c) à l'état bloqué.

7. Adaptateur d'appareil de terrain selon l'une des revendications précédentes, pour lequel l'électronique d'adaptateur (14) comprend un deuxième module radio (19b) avec une antenne pour recevoir le deuxième signal radio, le circuit d'alimentation (15) alimentant en énergie le deuxième module radio (19b) par la tension d'alimentation et le deuxième module radio (19b) étant conçu pour commander le circuit de pontage de la résistance de communication à l'aide du deuxième signal radio, et le deuxième module radio étant de préférence conçu pour recevoir le deuxième signal radio selon une connexion point à point basée sur la liaison radio, de préférence une connexion Bluetooth, une connexion Bluetooth Low Energy, une connexion NFC ou une connexion RFID.

8. Adaptateur d'appareil de terrain selon l'une des revendications précédentes, pour lequel l'électronique d'adaptateur (14) comprend un premier module radio (19a) avec une antenne pour émettre et/ou recevoir le premier signal radio, le circuit d'alimentation (15) alimentant en énergie le premier module radio (19a) par la tension d'alimentation et le premier module radio (19a) étant conçu pour convertir le signal bifilaire en le premier signal radio et inversement, le premier module radio étant en outre conçu pour émettre et recevoir le premier signal radio selon l'un des protocoles radio ou l'une des technologies radio suivant(e)s :
- un protocole Bluetooth ou une variante dérivée de celui-ci,
- un protocole 6LoWPAN,
- un protocole WirelessHART,
- un protocole 6TiSCH, et/ou
- un protocole basé sur une technologie de téléphonie mobile, de préférence 2G, 3G, LTE ou 5G, particulièrement de préférence NB-IoT.
. Le système de radiocommunication peut émettre ou recevoir un protocole de radiocommunication basé sur une technologie de radiocommunication mobile, de préférence 2G, 3G, LTE ou 5G, de préférence NB-IoT.

9. Système de la technique d'automatisation, lequel système comprend :
- au moins un adaptateur d'appareil de terrain (6) selon une ou plusieurs des revendications suivantes ;
- au moins une unité de niveau supérieur (32) ;
- au moins un appareil de terrain de la technique d'automatisation (1) avec une électronique d'appareil de terrain (4) disposée dans un boîtier d'appareil de terrain (2) ;
- une première ligne bifilaire (12a), laquelle relie électriquement l'électronique d'adaptateur (14) à l'électronique d'appareil de terrain (4) via le premier et le deuxième élément de raccordement (16a, 16b) ;
- une deuxième ligne bifilaire (12b), laquelle relie électriquement l'électronique d'adaptateur (14) à l'unité de niveau supérieur (32) via le troisième et le quatrième élément de raccordement (11a, 11b) ;
- une unité de commande mobile (39), laquelle est conçue pour commander, à l'aide du deuxième signal radio, le circuit de pontage de la résistance de communication de telle sorte qu'au moins la résistance de communication (18) peut être activée ou désactivée de manière sélective par liaison radio.

10. Système selon la revendication précédente, pour lequel l'au moins un adaptateur d'appareil de terrain (6) est réalisé selon la revendication 4, et
le système comprenant en outre une résistance de communication HART (36) disposée dans un conducteur positif de la deuxième ligne bifilaire (12ba) et la ligne de pontage (37), la ligne de pontage (37) reliant le cinquième élément de raccordement (33) au conducteur positif de la deuxième ligne bifilaire (12ba) dans la zone située entre le circuit d'alimentation (15) et l'unité de niveau supérieur (32).

11. Système selon la revendication 9, pour lequel l'au moins un adaptateur d'appareil de terrain (6) est réalisé selon la revendication 5, et
le système comprenant en outre une résistance de communication HART (36) disposée dans un conducteur négatif de la deuxième ligne bifilaire (12bb).
